# EUROPÄISCHE PATENTANMELDUNG

(11) **EP 2 095 715 A1**
(43) Veröffentlichungstag der Anmeldung: **02.09.2009**
(21) Anmeldenummer: 08003420.0
(22) Anmeldetag: 26.02.2008
(51) Int. Cl.: A22C 13/00

(54) **Nahrungsmittelhülle mit Barrierewirkung für Sauerstoff und/oder Wasserdampf und geeignet einen Nahrungsmittelzusatzstoff aufzunehmen, zu speichern und an das Nahrungsmittel abzugeben**

(71) Anmelder: CaseTech GmbH & Co. KG, 29656 Walsrode (DE)
(72) Erfinder: Henze-Wethkamp, Heinrich, 29664 Walsrode (DE); Krallmann, Anton, 29862 Bad Fallingsbostel (DE); Oblotzki, Jörg, 32107 Bad Salzuflen (DE)
(74) Vertreter: Polypatent

(57) **Zusammenfassung**

Die vorliegende Erfindung betrifft eine mehrschichtige, nahtlose Schlauchfolie als Nahrungsmittelhülle mit Barrierewirkung für Sauerstoff und/oder Wasserdampf, die in der Lage ist, einen Nahrungsmittelzusatzstoff aufzunehmen, zu speichern und an das Nahrungsmittel abzugeben. Sie wird als Umhüllung von pastösen oder flüssigen Gütern verwendet und ist besonders gut geeignet als künstliche Wursthülle. Die Erfindung betrifft ferner eine besondere Flüssigrauchzusammensetzung, welche in Kombination mit einer solchen Schlauchfolie besonders geeignet ist, um die enthaltenen Farb- und Geschmacksstoffe an das Lebensmittel zu übertragen.

## Beschreibung

Die vorliegende Erfindung betrifft eine mehrschichtige, nahtlose Schlauchfolie als Nahrungsmittelhülle mit Barrierewirkung für Sauerstoff und/oder Wasserdampf, die in der Lage ist, einen Nahrungsmittelzusatzstoff aufzunehmen, zu speichern und an das Nahrungsmittel abzugeben. Sie wird als Umhüllung von pastösen oder flüssigen Gütern verwendet und ist besonders gut geeignet als künstliche Wursthülle, insbesondere für die Herstellung von Wurst, welche ohne zusätzliche Verarbeitungsschritte Aroma- und/oder Farbstoffe aufnehmen soll.

Je nach herzustellendem bzw. zu verpackendem Gut, muss eine Schlauchhülle umfangreiche spezifische Eigenschaften erfüllen, um den Anwendungen in der Praxis gerecht zu werden. Bei der Wurstherstellung können dies beispielsweise hohe Barriereeigenschaften gegen Wasserdampf und Sauerstoff, Temperaturbeständigkeit bis Sterilisationstemperatur, definierte Haftung zum Füllgut, ausreichender Schrumpf, hohe mechanische Festigkeit, Formstabilität, Prallheit, gutes Schälverhalten, gutes Heiß- und Kaltanschnittverhalten, leichte Konfektionierbarkeit, insbesondere Raffbarkeit, gute Einfärbbarkeit und Farbdeckung, gute Bedruckbarkeit, Transfereigenschaften von aufgebrachten Farb- und Aromastoffen, sichere Druckfarbenhaftung sowie Unbedenklichkeit laut Lebensmittelrecht (Richtlinien EG, Bundesinstitut für Risikobewertung (BfR), Food and Drug Administration FDA) und ökologische Unbedenklichkeit der verwendeten Materialien sein.

Das Räuchern von Lebensmitteln in Räucherkammern ist seit langem Stand der Technik. Wie aus der DE 3029028 A1 bekannt, kommen insbesondere Cellulose-, Cellulosefaserdarm und Kollagendärme aufgrund ihrer hohen Durchlässigkeitswerte für Rauchfarbe und Raucharoma zur Anwendung. Dieser Räucherschritt ist allerdings ein aufwendiger Prozess, der mit zusätzlichen Kosten verbunden ist. Aufgrund der wachsenden Kostensituation wurden insbesondere räucherbare Kunststoffhüllen entwickelt.

Aus der DE 10208858 A1 ist ein Aufbau bekannt, der zur Erhöhung der Rauch- und Wasserdampfdurchlässigkeit ein Gemisch aus einem thermoplastischen Material mit einer Polysaccharid-Komponente, einem Plastifizierungsmittel, einem Glykol- und/oder Polyglykol-Einheiten beschreibt. Das Polysaccharid ist vorzugsweise Stärke. Dies setzt allerdings voraus, dass keine weiteren Barriereschichten folgen, die diese Transfereigenschaften unterbinden.

Aus dem Stand der Technik ist weiter bekannt, dass zur Übertragung von Aroma- und Farbstoffen künstliche Wursthüllen von außen und innen imprägniert werden können. Die Imprägnierung von außen erfordert dafür allerdings eine Hülle, welche eine ausreichend große Durchlässigkeit für diese Stoffe besitzt. Die hohe Durchlässigkeit führt zu Gewichtsverlusten aufgrund entweichenden Wasserdampfes und führt zur Vergrauung durch eintretenden Sauerstoff. Diese Nachteile können mehrschichtige Polymerhüllen ausgleichen.

Nahtlose Schlauchhüllen aus thermoplastischen Kunststoffen sind auf dem Markt weit verbreitet und zeichnen sich durch ihre guten Barriereeigenschaften aus. Aus Savic, Z.: Sausage Casings, VICTUS Lebensmittelindustriebedarf, Wien, Österreich, p. 245-300 und Kohan, Melvin I.: Nylon Plastics Handbook, Carl Hanser Verlag, Munich Vienna New York, 1995, p 151-190, ist bekannt, dass zur Herstellung derartiger Schlauchhüllen das Blasfolien- oder das Double-Bubble-Verfahren eingesetzt werden kann. Diese Verfahren werden auch in der EP 0559084 B1 beschrieben.

Die DE 19846305 A1 beschreibt eine Barrierehülle, die dadurch gekennzeichnet ist, dass die Hülle mit einer innen liegenden, saugfähigen Schicht von einigen Hundertstel bis 1/10 mm versehen ist. Diese Schicht kann in einem weiteren Verfahrensschritt mit Farb- und/oder Aromastoffen getränkt werden. Die saugfähige Schicht ist hier ein Faservlies, welches über eine Klebeschicht mit der Deckelfolie verbunden ist. Nach einem Trocknungsschritt kann das Laminat mit doppelseitigem Klebeband oder überlappender Heißschweißung zum Schlauch geformt werden. Nachteilig bei diesem Aufbau ist neben dem hohen Materialverbrauch, die Siegelnaht, welche die Schäleigenschaften der Hülle schwächt und zudem die mechanische Festigkeit der Hülle beeinflusst.

Für die Imprägnierung muss die innen liegende Brätkontaktseite ausreichende Saugfähigkeit aufweisen. Dabei sollte die Flüssigkeit vollständig eingezogen bzw. abgetrocknet sein, um ein Verkleben der Schichten oder ungleichmäßige Tröpfchenbildung zu vermeiden. Das Abtrocknen der Imprägnierung bzw. die Aufnahme durch die Innenschicht ist problematisch, insbesondere bei Schlauchhüllen, da diese in Kombination mit Barriereschichten ein geschlossenes System bilden, was den Trocknungsprozess behindert. Ferner ist bekannt, dass Flüssigraucharomen und Farbstoffe direkt zum Füllgut gegeben werden können, was allerdings zu einer unzureichenden Farbgebung auf der Außenseite der Wurst führen kann.

Die DE 10344867 A1 beschreibt einen mehrschichtigen Aufbau, bei dem die Innenschicht eine Oberflächenspannung von mindestens 28 dyn/cm² aufweist und keine Bräunungsmittel enthält. Ferner kann, gegebenenfalls durch eine so genannte Coronaentladung, die Oberflächenspannung und somit das Haftvermögen der Innenschicht modifiziert werden. Dieses Verfahren ist allerdings technisch aufwendig und erhöht die Gefahr des Verklebens der Innenschicht durch die Coronabehandlung.

Die DE 10244088 beschreibt eine Barrierehülle, welche durch den Zusatz von mindestens einem organischen Füllstoff in der Innenschicht, der Nahrungsmittelzusätze enthält, beim Brühen des Füllgutes diese eingelagerten Nahrungsmittelzusätze übertragen kann. Durch den organischen Füllstoff muss allerdings ein Trägermaterial mit niedrigem Schmelzpunkt verwendet werden. Bevorzugt handelt es sich hier um eine Matrix aus einem Ethylen/Vinylacetat-Copolymer (EVA). Es werden keine Angaben zur Bräthaftung gemacht. Der Einsatz von Ethylen/Vinylacetat-Copolymeren in direktem Kontakt mit Lebensmitteln mit Fettgehalt ist streng reglementiert und hat somit in Bezug auf Konformität mit den gesetzlichen Vorgaben Grenzen. Ferner sind diese Materialien sehr flexibel, wodurch die mechanische Festigkeit herabgesetzt wird. In Kombination mit Thermoplasten, welche einen deutlich höheren Schmelzpunkt als die EVA-Matrix mit organischen Füllstoff besitzen, wird ein spezielles Coextrusionswerkzeug benötig, welches eine thermische Trennung der einzelnen Schmelzeschichten gewährleistet. Ist dies nicht gegeben, können die organischen Stoffe thermisch geschädigt werden, was zu sogenannten Verbrennern führen kann.

In der EP 1439756 B1 wird zur Steigerung der Saugfähigkeit ein Gemisch aus thermoplastischer Stärke und/oder thermoplastischen Stärkederivaten sowie ein weiteres Homo- oder Copolymer mit Hydroxycarbonsäure-Einheiten verwendet. Die Kombination der verwendeten Polymere soll dabei eine ausreichende Bräthaftung aufweisen. Die saugfähige Schicht befindet sich zunächst außen und die Hülle muss nach dem Auftrag des Flüssigrauches in einem aufwendigen Arbeitschritt gewendet werden. Die Folie kann mehrschichtig ausgeführt sein und Barriereschichten enthalten. Bevorzugt wird die Folie unverstreckt hergestellt, wodurch allerdings die mechanische Festigkeit und die ausreichende Schrumpffähigkeit, welche für eine faltenfreie Umhüllung benötigt wird, herabgesetzt werden.

Die US 6,589,615 B1 beschreibt einen anderen Ansatz. In die Innenschicht werden Porigkeitsmodifikatoren wie Glycerin, Sojabohnenöl und weitere eingebracht, welche mit Hilfe der Compoundiertechnik in eine Matrix von Polyamid oder Polyolefin eingebettet sind. Die beschriebenen Hüllen können ein- oder mehrschichtig ausgeführt sein und mit oder ohne Aroma- und Farbstoffe ausgerüstet werden. Die Porigkeitsmodifikatoren sorgen während des Extrusionsprozesses zu einer Phasentrennung des Schmelzecompounds, was zu einem Netz aus mit einander verbunden Hohlräumen führt. Diese Hohlräume können in einem weiteren Schritt mit flüssigen Additiven gefüllt werden. Die Porigkeit wird hierbei über den jeweiligen Anteil des Porigkeitsmodifikators erzielt. Diese Hohlräume erlauben allerdings auch eine erhöhte Durchlässigkeit für Wasserdampf und Sauerstoff. Wird die Durchlässigkeit für Wasserdampf mittels einer Barriereschicht minimiert, so bleibt weiter die Durchlässigkeit für Sauerstoff und Aromastoffe erhalten.

Die hier zum Stand der Technik beschriebenen Hüllen weisen, bezogen auf das oben beschriebene Anforderungsprofil, in einzelnen Punkten Defizite auf. Insbesondere die Forderungen einer verklebungsfreien nahtlosen Hülle mit gleichmäßiger Verteilung der Imprägnierung und ausreichender Bräthaftung sind durch die bekannten Hüllen auf dem Markt nicht vereinbar. Ferner sind diese oft aufwendig in der Herstellung oder verfügen über keine ausreichende Aufnahmefähigkeit der inneren Schicht. Überraschenderweise lassen sich die Schwächen aus dem Stand der Technik mit der vorliegenden Erfindung beheben.

Aus dem Mangel der beschriebenen Folienverbunde entstand auch der Bedarf, einen Aufbau für eine künstliche Nahrungsmittelhülle zu finden, der zum einen eine saugfähige Innenschicht aufweist und zum anderen den Gewichts- und Aromaverlust verhindert. Weiter soll diese Hülle sehr gute Transfereigenschaften auf das Füllgut von Rauchfarbe und Rauchgeschmack sowie ausreichende Bräthaftung aufweisen, ohne dabei die Schäleigenschaften durch störende Siegelnähte oder besonderes dickwandige Hüllenaufbauten zu beeinflussen.

Aufgabe der vorliegenden Erfindung war es daher eine verklebungsfreie nahtlose Nahrungsmittelhülle mit gleichmäßiger Verteilung der Imprägnierung und ausreichender Bräthaftung zur Verfügung zu stellen, wobei störende Fett- oder Geleeseparation vermieden wird und wobei die Hülle darüber hinaus nicht aufwändig in der Herstellung ist und über eine ausreichende Flüssigkeitsaufnahmefähigkeit der inneren Schicht verfügt sowie Gewichts- und Aromaverlust des Füllguts verhindert. Zusätzlich war es Aufgabe der vorliegenden Erfindung eine Flüssigrauchzusammensetzung zu finden, welche in Kombination mit der erfindungsgemäßen Hülle die oben genannten Anforderungen bezüglich Bräthaftung und sehr gute Transfereigenschaften von Rauchfarbe und Rauchgeschmack auf das Füllgut in besonderer Weise erfüllt.

Die gestellte Aufgabe konnte nun gelöst werden durch eine mehrschichtige, nahtlose Schlauchfolie als Nahrungsmittelhülle mit Barrierewirkung für Sauerstoff und/oder Wasserdampf, die in der Lage ist, einen Nahrungsmittelzusatzstoff aufzunehmen, zu speichern und an das Nahrungsmittel abzugeben, umfassend:
a) eine Außenschicht aus einem thermoplastischen Polymer in einer Schichtdicke von 3 bis 35 µm,
b) ein oder mehrere mittlere funktionale Schichten mit Barrierewirkung für Sauerstoff und/oder Wasserdampf aus thermoplastischem Polymer,
c) zumindest eine poröse Innenschicht aus einem thermoplastischen Polymer in einer Schichtdicke von 5 bis 40 µm, wobei
   i) die Innenschicht ein die Porosität bewirkendes Netzwerk von miteinander verbundenen Räumen aufweist, die bei der Herstellung der Schlauchfolie unter Zuhilfenahme eines Porigkeitsmodifikators, gebildet werden, nämlich in der Weise, dass der Porigkeitsmodifikator vor der Coextrusion dem thermoplastischen Polymer für die Innenschicht zugemischt und nach der Coextrusion eine Phasentrennung des thermoplastischen Polymers für die Innenschicht und des Porigkeitsmodifikators herbeigeführt wird,
   ii) die poröse Innenschicht eine Flüssigkeitsaufnahmefähigkeit bezogen auf den Gesamtverbund der Folie im Bereich von 1 bis 40 Gew.-%, bevorzugt von 3 bis 30 Gew.-%, weiter bevorzugt von 5 bis 20 Gew.-%, besonders bevorzugt von 6 bis 15 Gew.-%, aufweist, und
   iv) gegebenenfalls die miteinander verbundenen Räume der Innenschicht zumindest teilweise den Porigkeitsmodifikator und/oder einen Nahrungsmittelzusatzstoff speichern.

Im Falle mehrerer poröser Innenschichten beziehen sich die Merkmale der Porosität, des gespeicherten Porigkeitsmodifikators und/oder Nahrungsmittelzusatzstoffes und die Aufnahmefähigkeit auf alle porösen Innenschichten gemeinsam.

Die Flüssigkeitsaufnahmefähigkeit wird definiert als die Menge an Wasser, die von der porösen Innenschicht aufgenommen werden kann, bezogen auf den Gesamtverbund der Folie. Die Bestimmungsmethode basiert auf Gewichtsdifferenzmessungen und wird im Beispielteil genau beschrieben.

Anwendungstechnische Untersuchungen haben gezeigt, dass der Darm eine Mindestaufnahmefähigkeit von 5 Gew.-% bezogen auf den Gesamtaufbau der Folie besitzen sollte, um eine ausreichende Menge an Nahrungsmittelzusatzstoff(en) an das Füllgut übertragen zu können.

Zur Erläuterung sei bemerkt, dass der Nahrungsmittelzusatzstoff zwar in flüssiger Form auf die Innenschicht aufgebracht bzw. in die Innenschicht eingebracht wird, dort jedoch nicht notwendigerweise in flüssiger Form gespeichert werden braucht. Es ist denkbar, dass der aufgenommene Nahrungsmittelzusatzstoff durch verschiedene Faktoren zumindest teilweise geliert und/oder fest wird.

Wie oben beschrieben, wird das die Porosität der Innenschicht bewirkende Netzwerk von miteinander verbundenen Räumen bei der Herstellung der Schlauchfolie unter Zuhilfenahme eines Porigkeitsmodifikators gebildet. Bezüglich des oben erwähnten Coextrusionsverfahrens und der Phasentrennung des thermoplastischen Polymers für die Innenschicht und des Porigkeitsmodifikators wird auf die weiter unten stehende detailliertere Beschreibung des Herstellungsverfahrens für die erfindungsgemäße Schlauchfolie verwiesen.

In einer bevorzugten Ausführungsform der Erfindung ist die Schlauchfolie biaxial verstreckt oder unverstreckt. Unter biaxialer Verstreckung versteht der Fachmann die Quer- und Längsverstreckung des Extrudates bei Temperaturen zwischen Glasübergangstemperatur und Schmelztemperatur der verwendeten Materialien. Die biaxiale Reckung kann beispielsweise mittels einer mit einem Gas- oder Fluiddruckpolster gefüllten Blase erfolgen, die zwischen zwei mit unterschiedlich hohen Umfangsgeschwindigkeiten laufenden Walzenpaaren gas- bzw. fluiddicht eingeschlossen ist. Während das Verhältnis der unterschiedlichen Walzenumfangsgeschwindigkeiten dem Längsreckgrad entspricht, errechnet sich der Querreckgrad aus dem Verhältnis des Schlauchdurchmessers im gereckten Zustand zu dem im ungereckten Zustand. Der Flächenreckgrad resultiert aus dem Produkt des Längsreckgrades multipliziert mit dem Querreckgrad. Unter einer so genannten nicht verstreckten Folie versteht der Fachmann das Erstellen einer Folie aus dem schmelzeförmigen Zustand. Der anschließende Verstreckprozess aus dem thermoelastischen Zustand entfällt dabei.

Nahtlose Wursthüllen haben den Vorteil, dass diese eine hohe Festigkeit besitzen und aufgrund der nicht vorhandenen Naht ein gutes Schälverhalten aufweisen. Weiter besitzen Schlauchhüllen den Vorteil, dass die Innenschicht nicht von außen kontaminiert wird und somit eine sichere Lösung unter Hygienegesichtspunkten darstellt.

Das thermoplastische Polymer der Außenschicht und der funktionalen Schicht(en) ist vorzugsweise jeweils unabhängig voneinander ein Polymer auf Polyamid- oder Polyolefinbasis. Für die Außenschicht eignen sich im Prinzip alle entsprechenden Polymere einschließlich der unten beispielhaft aufgezählten und zum Teil näher beschriebenen Polyamide und Polyolefine. Ein Polymer auf Polyamidbasis ist für die Außenschicht bevorzugt, da dieses zum einen die Bedruckbarkeit und zum anderen die mechanische Stabilität gewährleistet. Weiter besitzt Polyamid im Gegensatz zu Polyolefinen eine erhöhte Sicherheit gegen Verkratzen.

Die Schichtdicke der Außenschicht liegt im Bereich von 3 bis 35 µm. Um eine hinreichende mechanische Stabilität bei gleichzeitig ausreichender Flexibilität zu erzielen, liegt die Schichtdicke der Außenschicht in einer bevorzugten Ausführungsform im Bereich von 5 bis 25 µm, weiter bevorzugt im Bereich von 8 bis 16 µm.

Für die funktionalen Schicht(en) werden jeweils unabhängig voneinander bevorzugt ebenfalls Polymere auf Polyamid- oder Polyolefinbasis verwendet, wobei es bei der Auswahl des Polymers jedoch jeweils auf die gewünschte Eigenschaft der Schicht ankommt, ob also zum Beispiel eine insbesondere Wasserdampf oder eine insbesondere Sauerstoff sperrende Schicht gewünscht ist.

In einer bevorzugten Ausführungsform der erfindungsgemäßen Schlauchfolie ist
a) die eine funktionale Schicht oder gegebenenfalls zumindest eine der mehreren funktionalen Schichten eine insbesondere Wasserdampf oder eine insbesondere Sauerstoff sperrende Schicht, oder
b) ist gegebenenfalls eine der mehreren funktionalen Schichten eine insbesondere Wasserdampf und eine weitere funktionale Schicht eine insbesondere Sauerstoff sperrende Schicht,
wobei jede der insbesondere Wasserdampf oder insbesondere Sauerstoff sperrenden Schichten unabhängig voneinander eine Schichtdicke von 1 bis 35 µm aufweist.

Für die unter anderem angestrebte Anwendung der Schlauchfolie als Umhüllung für Brüh- und Kochwurst sind gute Barriereeigenschaften hinsichtlich Sauerstoff- und Wasserdampfpermeation wünschenswert. Die Sauerstoffbarriere verhindert eine frühzeitige Vergrauung des der Folieninnenseite zugekehrten Brätes. Die Wasserdampfbarriere verringert den durch Abdampfen von Wasser aus dem Füllgut induzierten Gewichtsverlust der Verkaufsware, der einerseits den Erlös des Produktes reduziert und andererseits infolge von Volumenverlust zu faltigen unansehnlichen Produkten führen kann.

Die insbesondere Wasserdampf sperrende Schicht der erfindungsgemäßen Schlauchfolie ist vorzugsweise ein Polymer auf Polyolefinbasis, einschließlich Homo- oder Copolymere mit Ethylen-, Propylen-, Butylen- und/oder geradkettigen Olefin-Einheiten mit 2 bis 8 C-Atomen oder Mischungen dieser Homopolymere und/oder Copolymere untereinander.

Die weiteren funktionalen Schichten in den mehrschichtigen Ausführungsformen können aus weitgehend beliebigen Materialien bestehen. Bevorzugt können Schichten auf Basis von Polyolefin, insbesondere Polyethylen, Polypropylen, Polybutylen, LDPE, LLDPE (Linear Low Density Polyethylene) verwendet werden. Geeignet sind außerdem Metallocen-Polyolefine. Dabei handelt sich es sich um Polylolefine, die mit Hilfe so genannter Metallocen-Katalysatoren hergestellt worden sind und Vorteile hinsichtlich konventionell hergestellter Polyolefine aufweisen. So zeigen diese z. B. höhere Durchstoßfestigkeiten oder auch günstigere Barriereeigenschaften. Einen Überblick über Metallocen-Polyolefine geben Böhn und Fleissner in Kunststoffe 88 (1998) S. 1864-1870, Carl Hanser Verlag, München.

Die insbesondere Sauerstoff sperrende Schicht der erfindungsgemäßen Schlauchfolie ist vorzugsweise ein Polymer auf Polyamidbasis oder EVOH oder ein Polymerblend enthaltend ein oder mehrere dieser Polymere.

Als Polymerblend können im Rahmen der vorliegenden Erfindung Polymermischungen aus einem Polymer auf Polyamidbasis und/oder EVOH und/oder einem oder mehreren weiteren Polymeren, insbesondere Polyolefinen, verwendet werden.

Als Polymer auf Polyamidbasis können aliphatische oder teilaromatische Polyamide oder Copolyamide eingesetzt werden. Zu den aliphatische Polyamiden und Copolyamiden zählen Homopolyamide und Copolyamide aus aliphatischen primären Diaminen und aliphatischen Dicarbonsäuren sowie Homopolymerisate und Copolymerisate von ω-Aminocarbonsäuren oder deren Lactamen.

Die vorgenannten aliphatischen primären Diamine enthalten bevorzugt 4 bis 8 C-Atome. Geeignete Diamine sind zum Beispiel Tetra-, Penta-, Hexa- und Octamethylendiamin, besonders bevorzugt ist Hexamethylendiamin.

Die aliphatischen Dicarbonsäuren enthalten bevorzugt 4 bis 12 C-Atome. Beispiele solcher geeigneter Dicarbonsäuren sind Adipinsäure, Azelainsäure, Sebazinsäure und Dodecandicarbonsäure.

Die ω-Aminocarbonsäuren oder deren Lactame enthalten bevorzugt 6 bis 12 C-Atome. Ein Beispiel für eine ω-Aminocarbonsäuren ist die 11-Aminoundecansäure. Beispiele für Lactame sind ε-Caprolactam und ω-Laurinlactam.

Besonders bevorzugte aliphatische Polyamide sind Polycaprolactam (PA 6) und Polyhexamethylenadipinamid (PA66). Ein bevorzugtes aliphatisches Copolyamid ist PA 6/66, das aus Caprolactam-, Hexamethylendiamin- und Adipinsäureeinheiten besteht.

Die teilaromatischen Polyamide und Copolyamide basieren auf den vorstehend genannten aliphatische Polyamiden und Copolyamiden, insbesondere den aliphatischen Diaminen und/oder Dicarbonsäuren, wobei sowohl durch aromatische Diamine als auch aromatische Carbonsäuren aromatische Gruppen eingebaut sein können. Beispiele geeigneter aromatischer Diamine sind m-Xylylendiamin und Phenylendiamin. Beispiele geeigneter aromatischer Dicarbonsäuren sind Isophthalsäure und Terephthalsäure.

Ein bevorzugtes teilaromatisches Copolyamid enthält von m-Xylylendiamin und Adipinsäure abgeleitete Einheiten. Ein solches Polyamid (PA-MXD6) wird z.B. von der Firma Mitsubishi Gas Chemical Company Inc., Tokio, JP unter dem Namen MX-Nylon vertrieben. Wird PA-MXD6 als Bestandteil eines Polymerblends auf Basis von zwei oder mehreren verschiedenen Polyamiden oder Co-Polyamiden mit verwendet, so wird es bevorzugt in Mengen von 5 bis 40 Gew.-% pro Schicht, besonders bevorzugt 10 bis 30 Gew.-% eingesetzt.

Ein ebenfalls bevorzugtes teilaromatisches Copolyamid weist von Hexamethylendiamin, Isophthalsäure und Terephthalsäure abgeleitete Strukturen auf. Ein solches Polyamid (PA6I/6T) wird z. B. von der Fa. DuPont De Nemours, Wilmington, Delaware USA unter dem Namen Selar PA vertrieben. Wird PA6I/6T als Bestandteil eines Polymerblends auf Basis von zwei oder mehreren verschiedenen Polyamiden oder Co-Polyamiden mit verwendet, so wird es bevorzugt in Mengen von 2 bis 40 Gew.-% pro Schicht, besonders bevorzugt 5 bis 20 Gew.-% eingesetzt.

Wie oben erwähnt, können alle zuvor beschriebenen Polymere auch als Material für die Außenschicht verwendet werden.

Die Schichtdicke der funktionalen Schicht(en), insbesondere der Wasserdampf und/oder Sauerstoff sperrenden Schicht(en), liegt im Bereich von 1 bis 35 µm. Je nach verwendetem Polymermaterial kann der bevorzugte Bereich für die Schichtdicke eher im unteren Bereich, im mittleren Bereich oder im oberen Bereich liegen. Im Falle von z.B. Ethylen-Vinylalkohol-Copolymer-Schichten (siehe unten), die eine hervorragende Sauerstoffbarriere darstellen, liegt der bevorzugte Bereich für die Schichtdicke eher im unteren Bereich.

Alternativ oder zusätzlich kann für die insbesondere Sauerstoff sperrende Schicht der erfindungsgemäßen Schlauchfolie eine aus einem vollständig hydrolysierten Ethylen-Vinylalkohol-Copolymeren (EVOH) mit einem Ethylen-Anteil von 25 bis 53 Gew.-%, bevorzugt von 29 bis 38 Gew.-%, verwendet werden. Die Schichtstärke liegt in einer bevorzugten Ausführungsform zwischen 1 und 15 µm, in einer weiter bevorzugten Ausführungsform zwischen 2 und 8 µm, und besonders bevorzugt zwischen 3 und 6 µm.

Neben den oben beschriebenen Materialien für die insbesondere Sauerstoff bzw. Wasserdampf sperrenden Schichten, kann die eine funktionale Schicht oder gegebenenfalls eine oder mehrere der funktionalen Schichten auch aus den für die Innenschicht vorgesehenen und unten beschriebenen Polymeren und Zusatzstoffen bestehen, vorausgesetzt, die entsprechenden Schicht(en) weisen die geforderte Barrierewirkung für Sauerstoff und/oder Wasserdampf auf.

In einer bevorzugten Ausführungsform der erfindungsgemäßen Schlauchfolie ist die funktionale Schicht oder gegebenenfalls zumindest eine der mehreren funktionalen Schichten eine insbesondere haftungsvermittelnde Schicht in einer Schichtdicke von 1 bis 15 µm. Eine oder gegebenenfalls mehrere haftungsvermittelnde Schicht(en) können zwischen jeder dieser Schichten im Falle einer Schichtabfolge von untereinander schlecht aneinander haftenden Schichten verwendet werden, beispielsweise zwischen einer Schicht auf Polyamidbasis und einer Schicht auf Polyolefinbasis.

Das thermoplastische Polymer der haftungsvermittelnden Schicht ist wie die insbesondere Wasserdampf sperrende Schicht vorzugsweise ein Polymer auf Polyolefinbasis, einschließlich Homo- oder Copolymere mit Ethylen-, Propylen- und/oder geradkettigen Alpha-Olefin-Einheiten mit 4 bis 8 C-Atomen oder eine Mischung aus diesen Einheiten. Daraus ergibt sich, dass im Falle der wegen ihrer insbesondere haftungsvermiftelnden Eigenschaften eingesetzten Schichten, die Schlauchfolie automatisch auch Wasserdampf sperrende Eigenschaften erhält. Die Monomer-Einheiten des thermoplastischen Polymers der haftungsvermitteinden Schicht sind vorzugsweise zumindest teilweise mit Carbonsäure- und/oder Carboxylatgruppen modifiziert. Weitere geeignete Materialien für die Haftschicht sind insbesondere Pfropfpolymere, beispielsweise Polyolefine, die mit Maleinsäureanhydrid gepfropft sind, daneben auch Co- oder Terpolymere, die neben Ethylen- und/oder Propylen-Einheiten noch Einheiten mit funktionelle Gruppen enthalten. Die Einheiten mit funktionellen Gruppen sind beispielsweise (Meth)acrylsäure, (Meth)acrylsäurealkylester oder Vinylacetat. Ein geeigneter Haftvermittler ist ferner elastomermodifiziertes Polyethylen.

Das thermoplastische Polymer der haftungsvermittelnden Schicht ist bevorzugt mit Carbonsäure- und/oder Carboxylatgruppen modifiziert, so dass die Schicht bezüglich einer oder beider angrenzenden Schichten aus Polyamidbasiertem Material haftungsvermittelnde Eigenschaften aufweist. Bevorzugt ist die haftungsvermittelnde Schicht daher neben den auf die vorstehend genannten Monomere zurückgehenden Einheiten auch solche, die durch Einpolymerisieren von α, β-ungesättigten Mono- oder Dicarbonsäure, wie Acrylsäure, Methacrylsäure, Maleinsäure, Fumarsäure, Itaconsäure oder deren Säureanhydride, Säureester, Säureamide oder Säureimide erhalten werden.

Die Schichtdicke der haftungsvermittelnden Schicht liegt wie erwähnt vorzugsweise im Bereich von 1 bis 15 µm. Weiter bevorzugt ist der Bereich von 1 bis 10 µm und besonders bevorzugt von 1 und 6 µm.

In einer bevorzugten Ausführungsform der erfindungsgemäßen Schlauchfolie ist das thermoplastische Polymer der Innenschicht ein Polymer auf Polyamid-, Polyolefin- oder Polyesterbasis, einschließlich Polyethylen, Polypropylen, Polyvinylidenchlorid, Polyamid, Polystyrol, Polyethylenterephthalat, Polyvinylpolymer, Ethylenvinylpolymer, Polycarbonat oder Polybuten.

Bezüglich der Schichtdicke der Innenschicht konnte beobachtet werden, dass bei Anwendung des unten beschriebenen Herstellungsverfahren eine Schlauchhülle erhalten werden kann, die eine ausreichende Porosität und damit verbunden eine ausreichende Saugfähigkeit (Aufnahmefähigkeit) bereits ab einer Schichtdicke von mindestens 5 µm aufweist. Insbesondere mit der unten näher beschriebenen erfindungsgemäßen Flüssigrauchzusammensetzung kann ein sehr guter Geschmacksübertrag bereits bei einer dünnen Innenschichten erzielt werden. Dünnere Schichten zeigen allerdings kaum einen Effekt und weisen daher in der Regel nur eine unzureichende Aufnahmefähigkeit für flüssige Zusatzstoffe auf, wie die Ergebnisse der Wasseraufnahmefähigkeit und Aufnahmen der Struktur der Innenschicht gezeigt haben. Bevorzugt ist jedoch für die Innenschicht eine Schichtdicke im Bereich von 10 bis 30 µm, besonders bevorzugt von 15 bis 20 µm.

Es war also überraschend, dass mit der erfindungsgemäßen Hülle bereits eine Schichtdicke von 10 bis 20 µm für die poröse Innenschicht ausreichend sein kann, eine solche Menge an Aroma- und/oder Farbstoffen in der Schicht unterzubringen, so dass ein ausreichender Farb- und Geschmacksstoffübertrag ermöglicht wird. Dies ist deshalb überraschend, weil bei bisher hergestellten künstlichen Wursthüllen eine deutlich dickere saugfähige Innenschicht verwendet werden musste, wie es beispielsweise in der DE 19846305 A1 beschrieben wird.

Der Porigkeitsmodifikator der erfindungsgemäßen Schlauchfolie ist vorzugsweise ausgewählt aus der Gruppe die Sojaöle, Erdnussöle, Maisöle, Glycerine, Sorbite, Polyäthylenglykole, Mineralöle oder Tenside umfasst, einschließlich Polysorbaten, Polyoxyäthylen (POE) 20, Sorbitanmonostearate, Sorbitanmonolaurate, Sorbitanmonooleate, Glycerinmonooleate und Surfactol 365. Auch Mischungen von Porositätsmodifikatoren können für die erfindungsgemäße Schlauchfolie verwendet werden.

Die Menge der Porositätsmodifikatoren in der Hülle beträgt 1 bis 70 Gew.-% bezogen auf das Gesamtgewicht der Hülle, vorzugsweise 10 bis 40%. Die Porositätsmodifikatoren haben eine Dichte in einem Bereich von ungefähr 0,8 bis 1,3 g/cm³

Der Nahrungsmittelzusatzstoff der erfindungsgemäßen Schlauchfolie ist vorzugsweise ausgewählt aus der Gruppe die Aroma- und Geschmacksstoffe umfasst, einschließlich flüssiger Rauch, Vanilleextrakt, Orleanextrakt, Nahrungsmittelgewürze, andere Nahrungsmittelaromen und Duftextrakte oder Mischungen der zuvor genannten Stoffe. Die Menge der Aroma- und/oder Geschmacksstoffe in der Hülle kann 1 bis 60 Gew.-%, vorzugsweise 1 bis 40 Gew.-%, basierend auf dem Gesamtgewicht der Hülle betragen.

Als Nahrungsmittelzusatzstoff können auch oder zusätzlich Farbstoffe der erfindungsgemäßen Hülle hinzugefügt werden. Der Farbstoff kann ausgewählt sein aus der Gruppe die Karamell, braunen Zucker und andere Nahrungsmittelfarbstoffe umfasst. Die Menge des Farbstoffes in der Hülle kann 1 bis 80 Gew.-%, vorzugsweise 1 bis 60% basierend auf dem Gesamtgewicht der Hülle betragen.

Da die beschriebenen insbesondere Sauerstoff sperrenden Schichten auch über Aromastoffe sperrende Eigenschaften verfügen, kann gegebenenfalls auch mit relativ kleinen Zugabemengen flüssiger Additive ein ausreichender Rauchgeschmack übertragen werden. Bisherige mehrschichtige Aufbauten zeigten oft eine nicht ausreichende Barriere, um die Migration der Aromastoffe aus der Hülle heraus zu unterbinden.

In einer bevorzugten Ausführungsform der erfindungsgemäßen Schlauchfolie enthält die poröse Innenschicht einen anorganischen Füllstoff, der ausgewählt ist aus Siliciumdioxid, Talk (Mg₂SiO₄), Aluminiumoxid, Aluminiumhydroxid, hydratisierter Tonerde, kalzinierte Tonerde, Titandioxid, Zirkoniumoxid, Natriumsilicat und Silicat. Die Menge des anorganischen Füllstoffes in der Nahrungsmittelhülle kann 0 bis 40 Gew.-%, vorzugsweise 0 zum 30 Gew.-%, bezogen auf das Gesamtgewicht Hülle betragen. Der anorganische Füllstoff hat vorzugsweise eine Teilchengröße von 1 bis 25 µm, weiter bevorzugt von 2 bis 10 µm und vorzugsweise eine Dichte von 1,2 bis 5,7 g/cm³, bevorzugter von 2,0 bis 2,7 g/cm³_{.}

Zusätzlich können alle Schichten gegebenenfalls Additive wie Gleitmittel, Antiblockmittel, Nukleierungsmittel, Füllstoffe, Farbpigmente und/oder andere Additive beinhalten.

Die Gesamtschichtdicke der Schlauchfolie beträgt vorzugsweise 25 bis 100 µm, weiter bevorzugt 30 bis 60 µm. Die Einzelschichtdicken wie in den Beispielen beschrieben, wurden über eine so genannte Dünnschnittaufnahme ermittelt. Zunächst wird ein Dünnschnitt des Folienquerschnittes erstellt (Firma Reichert/Junge Typ 2035). Anhand einer mikroskopischen Aufnahme (Firma Leitz/Wetzler Ortholux IIPOL-MK) werden anschließend die Einzelschichtdicken über ein digitalisiertes Bild ermittelt.

In einer bevorzugten Ausführungsform der Erfindung beträgt die H₂O-Durchlässigkeit der gesamten Schlauchfolie maximal 20 g/m²·d, bevorzugt maximal 15 g/m²·d, besonders bevorzugt maximal 10 g/m²·d, am meisten bevorzugt maximal 5 g/m²·d und/oder die O₂-Durchlässigkeit der gesamten Schlauchfolie maximal 40 cm³/m₂·d·bar, bevorzugt maximal 30 cm³/m²·d·bar, besonders bevorzugt maximal 20 cm³/m²·d·bar, am meisten bevorzugt maximal 10 cm³/m²·d·bar. Die jeweilige Bestimmungsmethode wird im Beispielteil genannt.

Die Hüllen weisen einen freien Schrumpf in mindestens einer Orientierungsrichtung gemessen bei 100°C nach 15 min zwischen 5 und 35 %, vorzugsweise zwischen 10 und 25 %, besonders bevorzugt zwischen 12 und 18 %, auf. Unter 40°C beträgt der freie Schrumpf weniger als 10 %, bevorzugt weniger als 6 %, so dass eine ausreichende Lagerstabilität der thermofixierten Hüllen gewährleistet ist. Die Schrumpfmessung erfolgt nach der weiter unten bei den Beispielen beschrieben Prüfvorschrift.

Die erfindungsgemäße Hülle hat insbesondere bei der Kombination aus guter Sauerstoffbarriere, wodurch Aromaverluste minimiert werden, und Barriere gegen Wasserdampf, wodurch Gewichtsverluste verringert werden, große Vorteile gegenüber ähnlichen Hüllen aus dem Stand der Technik.

Die erfindungsgemäße Hülle zeigte in überraschender Weise auch eine erhöhte Bräthaftung, wenn kein Flüssigkeitsauftrag erfolgt ist. Dies ist insbesondere dann von Vorteil, wenn Lebensmittel mit hohem Wasseranteil (Schinkenwurst etc.) hergestellt werden, da durch den hohen Wasseranteil die Gefahr von sich absetzender Geleemasse zwischen Wurstoberfläche und der Innenseite der Hülle besteht. Die saugfähige Innenschicht kann dieses Problem beheben und erhöht gleichzeitig die Bräthaftung.

Die Herstellung der erfindungsgemäßen Schlauchfolie erfolgt über an sich bekannte Co-Extrusionsverfahren. Kurz zusammengefasst kann dies folgendermaßen geschehen: Die in Faser-, Granulat- und/oder Pulverform vorliegenden Rohstoffe, d.h. die weiter oben beschriebenen themoplastischen Polymere, die für die jeweiligen Schichten bestimmt sind, werden dazu in einem Co-Extruder getrennt voneinander komprimiert, aufgeschmolzen, homogenisiert und dann gemeinsam über eine Co-Extrusionsdüse ausgetragen und zu einem nahtlosen mehrschichtigen Schlauch geformt, vorzugsweise nach dem bekannten "double bubble-", wie in Savic, Z.: Sausage Casings, VICTUS Lebensmittelindustriebedarf, Wien, Österreich, S. 264 ff näher beschrieben. Bei der Herstellung nach diesem Verfahren wird der schmelzeförmig austretende mehrschichtige Primärschlauch zunächst mittels einer intensiven Luft- oder Wasserkühlung in den Festkörperzustand überführt. Anschließend erfolgt eine Erwärmung auf eine Temperatur zwischen Glasübergangstemperatur und Schmelztemperatur der verwendeten Polymere, welche für das biaxiale Verstrecken des mehrschichtigen Schlauches benötigt wird. Die Verstreckung der Primärblase erfolgt über einen anliegenden Innendruck, der zwischen zwei hintereinander befindlichen Walzenpaaren eingestellt wird. Zur gezielten Einstellung der Schrumpfeigenschaften kann die mehrschichtige Hülle anschließend einer Wärmebehandlung unterzogen werden.

Gegenstand der vorliegenden Erfindung ist also auch ein Verfahren zur Herstellung einer wie hier beschriebenen erfindungsgemäßen Schlauchfolie umfassend die Schritte:
a) Bereitstellen der für die jeweiligen Schichten bestimmten thermoplastischen Polymere, vorzugsweise in Faser-, Granulat- und/oder Pulverform;
b) Aufschmelzen und Homogenisieren der für die jeweiligen Schichten bestimmten thermoplastischen Polymere getrennt voneinander;
c) Coextrudieren der für die jeweiligen Schichten bestimmten thermoplastischen Polymere über eine Coextrusionsdüse unter Bildung eines nahtlosen mehrschichtigen Schlauch;
d) Überführen des coextrudierten mehrschichtigen Primärschlauchs in den Festkörperzustand, vorzugsweise mittels einer intensiven Luft- oder Wasserkühlung;
e) Erwärmen des Primärschlauches auf eine Temperatur, die zwischen Glasübergangstemperatur und Schmelztemperatur der verwendeten thermoplastischen Polymere liegt, wobei Glasübergangstemperatur und Schmelztemperatur nach DIN 53765 mittels DSC bestimmt weden;
f) biaxiales Verstrecken des erwärmten Primärschlauches über einen anliegenden Innendruck, der zwischen zwei hintereinander befindlichen Walzenpaaren eingestellt wird; und
g) optional, Einstellen der Schrumpfeigenschaften durch Erwärmen der verstreckten Schlauchfolie;
dadurch gekennzeichnet, dass ein Porigkeitsmodifikator, und optional ein anorganischer Füllstoff, vor der Coextrusion dem thermoplastischen Polymer für die Innenschicht zugemischt wird und nach der Coextrusion durch das Überführen des coextrudierten mehrschichtigen Primärschlauchs in den Festkörperzustand eine Phasentrennung des thermoplastischen Polymers für die Innenschicht und des Porigkeitsmodifikators herbeigeführt wird.

Bei dem zuvor beschriebenen Verfahren kann das Polymer für die Außenschicht, das Polymer für die funktionalen Schicht(en), das Polymer für die insbesondere Wasserdampf sperrende Schicht, das Polymer für die insbesondere Sauerstoff sperrende Schicht, das Polymer für die haftungsvermittelnde Schicht, das Polymer für die Innenschicht, der Porigkeitsmodifikator und/oder der anorganische Füllstoff für die poröse Innenschicht wie zuvor bei den erfindungsgemäßen Schlauchfolien beschrieben ausgewählt werden.

In einem zusätzlichen Konfektionierungsschritt an einer Befeuchtungsmaschine kann mittels einer stehenden Flüssigkeitsblase der Flüssigrauch an die Hülle übergeben werden. Der Schlauchhülle wird dafür von der Rolle abgewickelt, durchläuft dabei 2 Walzenpaare und wird wieder aufgewickelt. Die aufzutragende Menge an Flüssigrauch lässt sich über die Härte und der Oberflächenausführung der oberen Walzenpaare, über den Quetschdruck bzw. Liniendruck der Walzen zueinander, über die Durchlaufgeschwindigkeit, über die Bahnspannung währende des Arbeitsschrittes und auch über die Viskosität des Rauchkonzentrats steuern, wie in der DE 10124581 A1 beschrieben

Weiterhin kann das Auftragen des Rauchkonzentrats auch während des Raffprozess stattfinden. Das Auftragen von Flüssigkeiten während des Raffprozess wird in DE 42 16 401 beschreiben. In dieser Ausführung wird das Rauchkonzentrat beim Raffvorgang über entsprechende Leitungen durch das Raffrohr auf der Innenseite des Darmes übertragen. Die Menge an Rauchkonzentrat lässt sich über den Flüssigkeitsdruck beim Versprühen, die Wahl der Düsengröße und die Einlaufgeschwindigkeit beim Raffen steuern. Entscheidend für das gleichmäßige Auftragen ist die Auf und Abschalten der Pumpe beim intermittierenden Prozesses des Raffens.

Weiterer Gegenstand der vorliegenden Erfindung ist ein Nahrungsmittelzusatzstoff, insbesondere eine saure Flüssigrauchzusammensetzung, die neben den üblichen Inhaltsstoffen einer solchen Flüssigrauchzusammensetzung, 2 bis 25 Gew.-%, bevorzugt 4 bis 20 Gew.-%, besonders bevorzugt 6 bis 15 Gew.-% einer Sorbitan-Verbindung enthält, die ausgewählt ist aus der Gruppe, die Sorbitan monolaurate (z.B. Span 20), Sorbitan monopalmitate (z.B. Span 40), Sorbitan monostearate (z.B. Span 60) und Sorbitan monooleate (z.B. Span 80) umfasst. Zu den üblichen Inhaltsstoffen einer solchen sauren Flüssigrauchzusammensetzung zählen 2 bis 20 Gew.-%, bevorzugt 5 bis 15 Gew.-%, besonders bevorzugt 8 bis 12 Gew.-% Gesamtsäure; und/oder 15 bis 50 mg/ml, bevorzugt 22 bis 42 Gew.-%, besonders bevorzugt 30 bis 35 mg/ml Raucharoma; und/oder 35 bis 60 Gew.-%, bevorzugt 40 bis 55 Gew.-%, besonders bevorzugt 45 bis 50 Gew.-% Carbonyl; und/oder ein Brixgehalt von 45 bis 80 °Brix, bevorzugt 58 bis 72 °Brix, besonders bevorzugt 60 bis 65 °Brix.

Die in den Flüssigrauchprodukten enthaltenen Carbonyle, Phenole und Säuren werden nach dem Fachmann bekannten Methoden bestimmt: Der Gesamtsäurewert etwa wird durch potentiometrische Säuretitration mittels NaOH gemessen. Die Bestimmung des Phenolgehaltes erfolgt mittels einer modifizierten Gibbs Methode unter der Bezeichnung QP-09.110 aus Mai 94 und die Bestimmung des Carbonylgehaltes mittels einer modifizierten Lappan-Clark Methode unter der Bezeichnung QP-09.100 auch aus Mai 94.

Gegenstand der vorliegenden Erfindung ist auch eine mehrschichtige, nahtlose Schlauchfolie als Nahrungsmittelhülle mit Barrierewirkung für Sauerstoff und/oder Wasserdampf, insbesondere wie hierin beschrieben, wobei die Schlauchfolie den zuvor beschriebenen Nahrungsmittelzusatzstoff umfasst, der an das Nahrungsmittel abgegeben werden kann.

Die erfindungsgemäßen Schlauchfolien, insbesondere in Kombination mit der erfindungsgemäßen Flüssigrauchzusammensetzung, eignen sich hervorragend als Nahrungsmittelhülle beispielsweise zur Verpackung von Wurst, Tiernahrung, Käse, Teigmassen und anderen pastösen oder flüssigen Gütern.

### Beispiele

### Bestimmung Flüssigkeitsaufnahmefähigkeit:

Zunächst wird die Innenschicht einer 10 x 10 cm großen Probe für 10 Min. mit entionisiertem Wasser bei 20 °C beaufschlagt. Anschließend wird überschüssiges Wasser mit einem saugfähigen Tuch entfernt, so dass eine trockene Oberfläche erzeugt wird. Nach einer Gewichtsmessung an einer Laborwaage (Firma Mettler, Typ PM 400) wird die Probe bei 80 °C für eine Stunde in einem Klimaschrank (Firma Heraeus, Typ B6) erwärmt, wodurch der Darm vollständig abtrocknet. Die zweite Gewichtsmessung liefert dann die Differenz zu der ersten Messung. Die Gewichtsdifferenz in Prozent bezogen auf die trockene Probe entspricht der Aufnahmefähigkeit der Innenschicht.

### Bestimmung der Durchlässigkeiten bezüglich Wasserdampf und Sauerstoff

Sauerstoffdurchlässigkeit in cm³/m²·d·bar gemessen bei 23 °C und 75 % relative Feuchte nach DIN 53 380; Wasserdampfdurchlässigkeit in g/m²·d gemessen bei 23°C und 85 % relative Feuchte nach DIN 53 122.

### Bestimmung des Schrumpfes

Unter Schrumpfung wird die ungehinderte, d.h. spannungslose Wärmeschrumpfung der nahtlosen Schlauchhülle verstanden. Bestimmt werden der Längsschrumpf und Querschrumpf. Für die Längsschrumpfmessung werden Folienstreifen aus der nahtlosen Schlauchhülle von 15 mm (in Querrichtung) x 100 mm (in Längsrichtung) zugeschnitten. Für die Querschrumpfmessung werden Folienstreifen von 15 (in Längsrichtung) x 50 mm (in Querrichtung) zugeschnitten. Anschließend werden die Proben 15 min in Leitungswasser gekocht. Nach dem Kochen werden die geschrumpften Streifen mit einer Pinzette aus dem Bad genommen und mit einem Lineal gemessen. Die Messwerte werden in Prozent als Längenverlust von der ursprünglichen Messlänge angegeben. Es wird der Mittelwert aus je 5 Messungen gebildet. Die Genauigkeit der Messung beträgt ca. ±1 %.

Glasübergangstemperatur und Schmelztemperatur werden nach DIN 53765 mittels DSC (Differential Scanning Calorimetrie) bestimmt.

Folgende Prüfungen wurden an der gekochten und abgekühlten Wurst durchgeführt:

### 1. Das Öffnungsverhalten der Därme beim Entraffen auf dem Füllrohr wird beurteilt.

Insbesondere bei ungünstigen Verhältnissen zwischen dem Rauchkonzentrat und dem Saugvermögen des Darmes, kommt es vor, dass Folien auf der Innenseite verkleben. Ein Verkleben der Folieninnenseiten führt zum Ausfall der Folie. Wenn sich der Darm geräuschfrei vom Füllrohr entraffen lässt, kann die Note 1 verwendet werden. Wenn es beim Entzerren zum Einreißen der Folie und somit zur Zerstörung der Schlauchhülle kommt, wird die Note 6 vergeben.

### 2. Beurteilung der Gleichmäßigkeit der Einfärbung

Hier wird der Wurstoberfläche beurteilt, die im Kontakt mit der Schlauchhülle mit Rauchkonzentrat belegt war. Insbesondere wird die Gleichmäßigkeit der gewünschten Verfärbung beurteilt. Eine gleichförmige Verteilung bedeutet keine Konzentration von dunklen oder hellen Stellen auf dem Wurstbrät. Bei sehr guter Gleichmäßigkeit wird die Note 1 vergeben und eine ungleichmäßige Verteilung wird mit einer Note 6 bewertet.

### 3. Beurteilung Farbübergang auf das Brät

Die Beurteilung findet nach dem Abziehen der Schlauchhülle statt. Bei deutlich dunklerer Ton durch den Rauchkonzentrat wird die Note 1 und wenn sich die Brätfarbe mit dem Rauchkonzentrat nicht verändert hat, wird die Note 6 vergeben. Bei einem deutlich verändertem Farbton der Wurstmasse gegenüber der Nullprobe, die ohne Rauchkonzentrat und ohne Räuchern hergestellt wurde, wird die Note 1 und wenn sich die Brätfarbe mit dem Rauchkonzentrat nicht verändert hat und damit das gleiche Aussehen wie die Nullprobe besitzt wird die Note 6 vergeben.

### 4. Beurteilung Geleevorkommen nach dem Kochvorgang

Wenn nach dem Abziehen der Schlauchhülle von dem Brät kein Gelee zu erkennen ist, wird die Note 1 vergeben. Wenn die Oberfläche der Wurst komplett mit Gelee bedeckt ist, bekommt es die Note 6. Die anderen Noten beschreiben die Zwischenschritte in den Abstufungen.

### 5. Beurteilung Geschmack der ersten Schicht

Die Beurteilung findet nach dem Abziehen der Schlauchhülle statt. Da das Brät nur in einer gegrenzten Schichtdicke mit dem Rauchkonzentration in Berührung gekommen ist, wird auch nur die Randschicht unter der Schlauchhülle von einem Team aus geschulten Prüfern geprüft. Durch die extremen Unterschiede in den Prüfmustern kann eine deutlich Abstufungen getroffen werden. Die Nullprobe besteht aus Brät, dass ohne Rauchkonzentrat hergestellt wurde.

### 6. Beurteilung des Schälverhaltens

Beurteilt wurde wie leicht sich die Hülle nach dem Einschneiden abschälen ließ und wie gut das Schälverhalten (z.B. Richtungswechsel beim Schälen) war (Schulnotenprinzip).

### Einqesetzte Materialien und Beispiele für Schichtaufbau

| | |
|---|---|
| **PA6:** | Durethan B40 FA, aliphatisches Polyamid, Lanxess, Leverkusen, DE |
| **EVOH:** | EVAL^{®} 171 B, Ethylenvinylalkohol Copolymer, Mitsui & Co. Deutschland GmbH, Düsseldorf, DE |
| **CoPA:** | Ultramid C33 LN, aliphatisches Copolyamid auf Basis Polyamid 6 und Polyamid 66, BASF AG, Ludwigshafen, DE |
| **HV2:** | Tymor^{®} 1228 B, modifiziertes Polyolefin auf Basis von mit Maleinsäureanhydrid gepfropftem PE-LLD, Rohm & Haas, Woodstock. IL, USA |
| **PAX:** | F09 kp PA-Compound, APorous Ltd. USA |

| **Schichtaufbau Beispiel 1:** | | |
|---|---|---|
| Schicht A: (Außenschicht) | PA6 | 15 µm |
| Schicht B1: | EVOH | 3 µm |
| Schicht B2: | PA6 | 6 µm |
| Schicht C: | HV2 | 5 µm |
| Schicht D: (Innenschicht) | PAX | 15 µm |

| **Schichtaufbau Beispiel 2:** | | |
|---|---|---|
| Schicht A: (Außenschicht) | PA6 | 10 µm |
| Schicht B1: | PA6/66 | 9 µm |
| Schicht B2: | PA6 | 6 µm |
| Schicht C: | HV2 | 5 µm |
| Schicht D: (Innenschicht) | PAX | 15 µm |

| **Schichtaufbau Vergleichsbeispiel 1:** | | |
|---|---|---|
| Schicht A: (Außenschicht) | PA6 | 8 µm |
| Schicht B: | HV2 | 5 µm |
| Schicht C: (Innenschicht) | PA6+ PA6/66 | 30 µm |

| **Schichtaufbau Vergleichsbeispiel 2: Monofolie** | | |
|---|---|---|
| Schicht A: | PA6 + PA6/66 | 30 µm |

### Versuche Wasserdampfdurchlässigkeit

**Tabelle 1: Ergebnisse der Wasserdampfdurchlässigkeit (DIN 53122, 23 °C/ 85 % relative Feuchte)**

| Versuch | Schichtaufbau gemäß | Probe 1 [g/m²*d] | Probe 2 [g/m²*d] | MW [g/m²·d] |
|---|---|---|---|---|
| Nr.1.1 | Bsp.1 1 | 3,29 | 3,29 | 3,29 |
| Nr.1.2 | Bsp. 2 | 8,44 | 8,34 | 8,39 |
| Nr.1.3 | Vgl.1 1 | 7,15 | 7,30 | 7,23 |
| Nr.1.4 | Vgl. 2 | 36,85 | 36,85 | 36,85 |

### Versuche Sauerstoffdurchlässigkeit

**Tabelle 2: Ergebnisse der Sauerstoffdurchlässigkeit (DIN 53 380 23°C/ 85% r.F.)**

| Versuch | Schichtaufbau gemäß | Probe 1 [cm³/m²*d] | Probe 2 [g/m²*d] | MW [g/m²*d] |
|---|---|---|---|---|
| Nr.2.1 | Bsp.1 1 | 3,67 | 3,27 | 3,47 |
| Nr.2.2 | Bsp. 2 | 28,10 | 29,30 | 28,70 |
| Nr. 2.3 | Vgl.1 | 22,82 | 23,67 | 23,25 |
| Nr.2.4 | Vgl. 2 | 23,72 | 22,86 | 22,79 |

### Versuche Wasseraufnahmefähigkeit

**Tabelle 3: Ergebnisse der Wasseraufnahmefähigkeit**

| | | | Schritt 1 | Schritt 2 | 10 Min. Wässerung | 60 Min Trocknung 80°C |
|---|---|---|---|---|---|---|
| Versuch | Schichtaufbau gemäß | Dicke der Innenschicht | Gewicht [g] befeuchtet | Gewicht [g] trocken | Differenz [g] | Gewichtszun ahme der Innenschicht gesamt [%] |
| Nr. 3.1 | Bsp. 1 | 6 µm | 0,728 | 0,69 | 0,038 | 5,1 |
| Nr. 3.2 | Bsp. 1 | 6 µm | 0,853 | 0,81 | 0,043 | 5,3 |
| Nr. 3.3 | Bsp. 1 | 6 µm | 0,75 | 0,708 | 0,042 | 5,6 |
| Nr. 3.4 | Bsp. 1 | 10 µm | 0,81 | 0,749 | 0,061 | 8,1 |
| Nr. 3.5 | Bsp. 1 | 10 µm | 0,946 | 0,881 | 0,065 | 7,4 |
| Nr. 3.6 | Bsp. 1 | 10 µm | 0,876 | 0,807 | 0,069 | 7,8 |
| Nr. 3.7 | Bsp. 1 | 5 µm | 0,985 | 0,877 | 0,108 | 11 |
| Nr. 3.8 | Bsp. 1 | 15 µm | 0,824 | 0,757 | 0,089 | 8,85 |
| Nr. 3.9 | Bsp. 1 | 15 µm | 0,884 | 0,814 | 0,06 | 7,28 |
| Nr. 3.10 | Vgl. 1 | 30 µm | 0,684 | 0,659 | 0,025 | 3,65 |
| Nr. 3.11 | Vgl. 1 | 30 µm | 0,824 | 0,797 | 0,027 | 3,39 |
| Nr. 3.12 | Vgl. 1 | 30 µm | 0,757 | 0,73 | 0,027 | 3,69 |

Die Ergebnisse der Wasseraufnahmefähigkeit zeigten bei einer Schichtstärke der Innschicht von 15 µm die beste Saugfähigkeit.

### Versuche Flüssigrauch

Für die folgenden Flüssigrauchversuche wurde eine Standard-Flüssigrauchzusammensetzung (RA JOS 01-007 M) der Firma Firma Red Arrow verwendet. Die Zusammensetzung hat eine Gesamtsäuregehalt von ca. 10 Gew.-%, ein Raucharomagehalt von ca. 33 mg/ml, einen Carbonylgehalt von ca. 48 Gew.-%, einen Brixwert von ca. 60 bis 65 °Brix, sowie als weitere Komponenten Sorbate, Polysorbate und Paraffinöl. Der Brixwert ist ein Maß für die lösliche Trockensubstanz in einer Flüssigkeit. Definition: Eine Flüssigkeit hat ein Grad Brix (=1 % Brix), wenn sie dieselbe Dichte hat wie eine Lösung von 1 g Saccharose in 100 g Saccharose/Wasser-Lösung; sie hat 10 °Brix (=10 % Brix), wenn ihre Dichte die einer Lösung von 10 g Saccharose in 100 g Saccharose/Wasser-Lösung (entspricht einer zehnprozentigen Lösung) ist.

Zur Bestimmung der optimalen Flüssigrauchzusammensetzung wurden die folgende Mischungen aus Tabelle 4.1 mit einer Zugabemenge von 6 g/m² auf die Innenseite des erfindungsgemäßen Beispiels 1 beaufschlagt. Die Ergebnisse der anwendungstechnischen Prüfung sind in Tabelle 4.2 dargestellt.

**Tabelle 4.1: Flüssigrauchversuche**

| Versuch | Schicht aufbau gemäß | JOS 01- 007 M | Span 40¹⁾ | Tween 80²⁾ | Paraffinöl |
|---|---|---|---|---|---|
| Nr. 4.1 | Bsp.1 | 100 | | | |
| Nr. 4.2 | Bsp.1 | 90 | 10 | | |
| Nr. 4.3 | Bsp.1 | 85 | 10 | | 5 |
| Nr. 4.4 (Vgl.) | Bsp. 1 | ohne | ohne | ohne | ohne |
| Nr. 4.5 (Vgl.) | Bsp. 1 | 90 | | 10 | |

| | | | | | |
|---|---|---|---|---|---|
| ¹⁾ Sorbitan monopalmitate; ²⁾ Polyoxyethylen (20) sorbitan monooleate | | | | | |

### Anwendungstechnische Untersuchungen

Die Auswertung der anwendungstechnischen Untersuchungen erfolgt nach dem Schulnotenprinzip Rauchfarbe/-geschmack: 1 =sehr gut (starker Geschmacks- bzw. Farbübergang) bis 6=ungenügend (kein Geschmacks- bzw. Farbübergang).

**Tabelle 4.2: Auswertung der anwendungstechnischen Untersuchungen**

| Versuch | Öffnungsver halten des Darms beim Entraffen auf dem Füllrohr | Gleichmäßi gkeit der Einfärbung nach dem Schälen der Wurst | Farbtiefe nach Abschälen der Schlauchhülle | Geleebildung unter der Schlauchhülle | Beurteilung Geschmack der ersten Schicht |
|---|---|---|---|---|---|
| Nr. 4.1 | 5 | 3 | 1 | 1 | 1 |
| Nr. 4.2 | 2 | 1 | 1 | 1 | 1 |
| Nr. 4.3 | 1 | 1 | 1 | 1 | 1,5 |
| Nr. 4.4 (Vgl.) | 1 | entfällt | entfällt | 1 | entfällt |
| Nr. 4.5 (Vgl.) | 1 | 1 | 1 | 5 | 1 |

Nach einer Wartezeit von ca. 5 Tagen wurden die Darmsorten gerafft und beim Raffen füllfertig eingestellt. Die gerafften Raupen wurden in handelsüblichen Polyethylenfolienbeuteln verschlossen.

Die Raupen wurden ohne Wässerung mit dem Standardbrät Mortadella auf Nennkaliber gefüllt und nach einem speziellen Kochvorgang behandelt. Als optimal für die Übertragung von Farbe und Rauchgeschmack hat sich ein Temperaturverlauf erwiesen, der beim Aufheizen der Kochkammer bei ca. 50°C gestoppt wird und nach einer Verweildauer von ca. 30 Minuten auf Endtemperatur aufwärmt. Die Brätmasse bleibt dann bei der Endtemperatur so lange, bis der Garprozess abgeschlossen ist.

Abschließend erfolgten anwendungstechnische Bewertungen der oben genannten Beispiele mit der Flüssigrauchzusammensetzung nach Versuch 4.3 aus Tabelle 4.1.

### Bewertung des Geschmacks- und Rauchübergangs

**Tabelle 5: Bewertung des Geschmacks- und Rauchübergangs nach dem Schulnotenprinzip**

| Schichtaufbau gemäß Beispiel | Rauchfarbe Note | Bemerkung | Rauchgeschmac k Note | Bemerkung |
|---|---|---|---|---|
| Bsp.1 | 1,5 | gleichmäßig | 1,5 | intensiv |
| Bsp.2 | 2 | gleichmäßig | 2 | intensiv |
| Vgl.1 | 4 | fleckig | 5 | kaum wahrnehmbar |
| Vgl.2 | 4 | fleckig | 3 | kaum wahrnehmbar |

### Versuche zum Schälverhalten und Bräthaftung

**Tabelle 6: Ergebnisse Schältest und Bräthaftung**

| Schichtaufbau gemäß Beispiel | Schältest | Bräthaftung | Geleeabsatz |
|---|---|---|---|
| Bsp. 1 | 1 | 1 | 0 |
| Bsp. 2 | 2 | 1,5 | 0 |
| Vgl. 1 | 2 | 0 | 5 |
| Vgl. 2 | 3 | 0 | 4 |

| | | | |
|---|---|---|---|
| 1 = sehr gut = der Darm lässt sich in jede Richtung einwandfrei schälen 6 = ungenügend = der Darm folgt nicht der Schälrichtung | | | |

Die Auswertung der durchgeführten Untersuchungen hat gezeigt, dass die Vergleichsbeispiele bei den oben genannten Testverfahren teilweise vergleichbare Ergebnisse liefern. Das vollständige Anforderungsprofil, wie oben beschrieben kann allerdings nur von der erfindungsgemäßen Hülle erfüllt werden.

## Patentansprüche

1. Mehrschichtige, nahtlose Schlauchfolie als Nahrungsmittelhülle mit Barrierewirkung für Sauerstoff und/oder Wasserdampf, die in der Lage ist, einen Nahrungsmittelzusatzstoff aufzunehmen, zu speichern und an das Nahrungsmittel abzugeben, umfassend:
a) eine Außenschicht aus einem thermoplastischen Polymer in einer Schichtdicke von 3 bis 35 µm,
b) ein oder mehrere mittlere funktionale Schichten mit Barrierewirkung für Sauerstoff und/oder Wasserdampf aus thermoplastischem Polymer,
c) eine poröse Innenschicht aus einem thermoplastischen Polymer in einer Schichtdicke von 5 bis 40 µm, wobei
i) die Innenschicht ein die Porosität bewirkendes Netzwerk von miteinander verbundenen Räumen aufweist, die bei der Herstellung der Schlauchfolie unter Zuhilfenahme eines Porigkeitsmodifikators, gebildet werden, nämlich in der Weise, dass der Porigkeitsmodifikator vor der Coextrusion dem thermoplastischen Polymer für die Innenschicht zugemischt und nach der Coextrusion eine Phasentrennung des thermoplastischen Polymers für die Innenschicht und des Porigkeitsmodifikators herbeigeführt wird,
ii) die poröse Innenschicht eine Flüssigkeitsaufnahmefähigkeit bezogen auf den Gesamtverbund der Folie im Bereich von 1 bis 40 Gew.-% aufweist, und
iv) gegebenenfalls die miteinander verbundenen Räume der Innenschicht zumindest teilweise den Porigkeitsmodifikator und/oder einen Nahrungsmittelzusatzstoff speichern.

2. Schlauchfolie nach Anspruch 1, wobei die Schlauchfolie biaxial verstreckt oder unverstreckt ist.

3. Schlauchfolie nach einem der vorherigen Ansprüche, wobei das thermoplastische Polymer der Außenschicht und der funktionalen Schicht(en) jeweils unabhängig voneinander ein Polymer auf Polyamid- oder Polyolefinbasis ist.

4. Schlauchfolie nach einem der vorherigen Ansprüche, wobei
a) die eine funktionale Schicht oder gegebenenfalls zumindest eine der mehreren funktionalen Schichten eine insbesondere Wasserdampf oder eine insbesondere Sauerstoff sperrende Schicht, oder
b) gegebenenfalls eine der mehreren funktionalen Schichten eine insbesondere Wasserdampf und eine weitere funktionale Schicht eine insbesondere Sauerstoff sperrende Schicht ist,
und jede der insbesondere Wasserdampf oder insbesondere Sauerstoff sperrenden Schichten unabhängig voneinander eine Schichtdicke von 1 bis 35 µm aufweist.

5. Schlauchfolie nach Anspruch 4, wobei die insbesondere Wasserdampf sperrende Schicht ein Polymer auf Polyolefinbasis ist, einschließlich Homo- oder Copolymere mit Ethylen-, Propylen-, Butylen- und/oder geradkettigen Olefin-Einheiten mit 3 bis 8 C-Atomen oder Mischungen dieser Homopolymere und/oder Copolymere untereinander.

6. Schlauchfolie nach Anspruch 4, wobei die insbesondere Sauerstoff sperrende Schicht ein Polymer auf Polyamidbasis oder EVOH oder ein Polymerblend enthaltend ein oder mehrere dieser Polymere ist.

7. Schlauchfolie nach einem der vorherigen Ansprüche, wobei die funktionale Schicht oder gegebenenfalls zumindest eine der mehreren funktionalen Schichten eine insbesondere haftungsvermittelnde Schicht in einer Schichtdicke von 1 bis 15 µm ist.

8. Schlauchfolie nach Anspruch 6, wobei das thermoplastische Polymer der haftungsvermittelnden Schicht ein Polymer auf Polyolefinbasis ist, einschließlich Homo- oder Copolymere mit Ethylen-, Propylen- und/oder geradkettigen Alpha-Olefin-Einheiten mit 3 bis 8 C-Atomen oder eine Mischung aus diesen Einheiten, wobei die Monomer-Einheiten des thermoplastischen Polymers vorzugsweise zumindest teilweise mit Carbonsäure- und/oder Carboxylatgruppen modifiziert sind.

9. Schlauchfolie nach einem der vorherigen Ansprüche, wobei das thermoplastische Polymer der Innenschicht ein Polymer auf Polyamid-, Polyolefin- oder Polyesterbasis ist, einschließlich Polyethylen, Polypropylen, Polyvinylidenchlorid, Polyamid, Polystyrol, Polyethylenterephthalat, Polyvinylpolymer, Ethylenvinylpolymer, Polycarbonat oder Polybuten.

10. Schlauchfolie nach einem der vorherigen Ansprüche, wobei der Porigkeitsmodifikator ausgewählt ist aus der Gruppe die Sojaöle, Erdnussöle, Maisöle, Glycerine, Sorbite, Polyäthylenglykole, Mineralöle oder Tenside umfasst, einschließlich Polysorbaten, Polyoxyäthylen (POE) 20, Sorbitanmonostearate, Sorbitanmonolaurate, Sorbitanmonooleate, Glycerinmonooleate und Surfactol 365 oder Mischungen der zuvor genannten Stoffe.

11. Schlauchfolie nach einem der vorherigen Ansprüche, wobei der Nahrungsmittelzusatzstoff ausgewählt ist aus der Gruppe die Aroma- und Geschmacksstoffe umfasst, einschließlich flüssiger Rauch, Vanilleextrakt, Orleanextrakt, Nahrungsmittelgewürze, andere Nahrungsmittelaromen und Duftextrakte oder Mischungen der zuvor genannten Stoffe, und/oder ist ausgewählt aus der Gruppe die Karamell, braunen Zucker und andere Nahrungsmittelfarbstoffe umfasst.

12. Schlauchfolie nach einem der vorherigen Ansprüche, wobei die poröse Innenschicht einen anorganischen Füllstoff enthält, der ausgewählt ist aus Siliciumdioxid, Talk (Mg₂SiO₄), Aluminiumoxid, Aluminiumhydroxid, hydratisierter Tonerde, kalzinierte Tonerde, Titandioxid, Zirkoniumoxid, Natriumsilicat und Silicat.

13. Schlauchfolie nach einem der vorherigen Ansprüche, wobei die Gesamtschichtdicke der Schlauchfolie 25 bis 100 µm beträgt.

14. Schlauchfolie nach einem der vorherigen Ansprüche, wobei die H₂O-Durchlässigkeit der gesamten Schlauchfolie maximal 20 g/m²·d und/oder die O₂-Durchlässigkeit der gesamten Schlauchfolie maximal 40 cm³/m² d·bar beträgt.

15. Schlauchfolie nach einem der vorherigen Ansprüche, wobei die Schlauchfolie einen Schrumpf in mindestens einer Orientierungsrichtung bei 100°C nach 15 min zwischen 5 und 35 % aufweist.

16. Verfahren zur Herstellung einer Schlauchfolie nach einem der Ansprüche 1 bis 15, umfassend die Schritte:
a) Bereitstellen der für die jeweiligen Schichten bestimmten thermoplastischen Polymere, vorzugsweise in Faser-, Granulat- und/oder Pulverform;
b) Aufschmelzen und Homogenisieren der für die jeweiligen Schichten bestimmten thermoplastischen Polymere getrennt voneinander;
c) Coextrudieren der für die jeweiligen Schichten bestimmten thermoplastischen Polymere über eine Coextrusionsdüse unter Bildung eines nahtlosen mehrschichtigen Schlauch;
d) Überführen des coextrudierten mehrschichtigen Primärschlauchs in den Festkörperzustand, vorzugsweise mittels einer intensiven Luft- oder Wasserkühlung;
e) Erwärmen des Primärschlauches auf eine Temperatur, die zwischen Glasübergangstemperatur und Schmelztemperatur der verwendeten thermoplastischen Polymere liegt, wobei Glasübergangstemperatur und Schmelztemperatur nach DIN 53765 mittels DSC bestimmt weden;
f) biaxiales Verstrecken des erwärmten Primärschlauches über einen anliegenden Innendruck, der zwischen zwei hintereinander befindlichen Walzenpaaren eingestellt wird; und
g) optional, Einstellen der Schrumpfeigenschaften durch Erwärmen der verstreckten Schlauchfolie;
**dadurch gekennzeichnet, dass** ein Porigkeitsmodifikator, und optional ein anorganischer Füllstoff, vor der Coextrusion dem thermoplastischen Polymer für die Innenschicht zugemischt wird und nach der Coextrusion durch das Überführen des coextrudierten mehrschichtigen Primärschlauchs in den Festkörperzustand eine Phasentrennung des thermoplastischen Polymers für die Innenschicht und des Porigkeitsmodifikators herbeigeführt wird

17. Verfahren nach Anspruch 16, wobei das Polymer für die Außenschicht, das Polymer für die funktionalen Schicht(en), das Polymer für die insbesondere Wasserdampf sperrende Schicht, das Polymer für die insbesondere Sauerstoff sperrende Schicht, das Polymer für die haftungsvermittelnde Schicht, das Polymer für die Innenschicht, der Porigkeitsmodifikator und/oder der anorganische Füllstoff für die poröse Innenschicht wie in den entsprechenden Produktansprüchen definiert ausgewählt wird.

18. Verwendung der Schlauchfolie nach einem der Ansprüche 1 bis 15 als Nahrungsmittelhülle, insbesondere als Wursthülle.

19. Nahrungsmittelzusatzstoff, insbesondere eine saure Flüssigrauchzusammensetzung, die neben den üblichen Inhaltsstoffen einer solchen Flüssigrauchzusammensetzung, 2 bis 25 Gew.-% einer Sorbitan-Verbindung enthält, die ausgewählt ist aus der Gruppe, die Sorbitan monolaurate, Sorbitan monopalmitate, Sorbitan monostearate und Sorbitan monooleate umfasst.

20. Mehrschichtige, nahtlose Schlauchfolie als Nahrungsmittelhülle mit Barrierewirkung für Sauerstoff und/oder Wasserdampf, insbesondere nach einem der Ansprüche 1 bis 15, **dadurch gekennzeichnet, dass** die Schlauchfolie einen Nahrungsmittelzusatzstoff nach Anspruch 19 umfasst, der an das Nahrungsmittel abgegeben werden kann.
